# EUROPÄISCHE PATENTSCHRIFT

(11) **EP 1 061 274 B1**
(45) Veröffentlichungstag und Bekanntmachung des Hinweises auf die Patenterteilung: **30.03.2005**
(21) Anmeldenummer: 00100312.8
(22) Anmeldetag: 07.01.2000
(51) Int. Cl.: F16B 19/00

(54) **Bördelrandspannstift**
Flanged edge clamping pin
Goujon de serrage à tête évasée

(30) Priorität: 18.06.1999 DE 19927856
(43) Veröffentlichungstag der Anmeldung: 20.12.2000
(73) Patentinhaber: Wilhelm Hedtmann GmbH & Co. KG., 58099 Hagen (DE)
(72) Erfinder: Bartos, Siegfried, 58089 Hagen (DE); Hedtmann, Friedrich Wilhelm, 58099 Hagen (DE)
(74) Vertreter: Köchling, Conrad-Joachim, Dipl.-Ing.

(56) Entgegenhaltungen:
- EP-A- 0 429 880
- DE-B- 1 157 856
- US-A- 4 314 778
- US-A- 4 472 087

## Beschreibung

Die Erfindung betrifft einen Bördelrandspannstift, bestehend aus einer metallischen Federhülse mit durchgehendem Längsschlitz, an deren einem Ende ein nach radial außen abragender Bördelrand ausgebildet ist, wobei der Hülsenmantel im neben dem Längsschlitz befindlichen Bereich zum Inneren der Hülse hin verformt ist.

Ein derartiger Bördelrandspannstift ist aus der US-A 4 472 087 bekannt.

Bei diesen Bördelrandspannstiften ist der Hülsenmantel im neben dem Längsschlitz befindlichem Bereich über die gesamte Länge zum Inneren der Hülse hin abgekantet, wobei die Abkantungen sich an ihren freien Enden berühren. Theoretisch mag eine solche Ausbildung eines Bördelrandspannstiftes zu einer Versteifung des Spannstiftes führen, jedoch ist eine solche Ausbildung äußerst schwierig zu fertigen, weil die Abwinklungen beim Wickeln des Bandmaterials zur Formung des Bördelrandspannstiftes nicht angeformt werden können. Aufgrund der Fertigungsschwierigkeiten ist ein solcher Bördelrandspannstift auch nicht im Markt erhältlich.

Des Weiteren sind Bördelrandspannstifte aus der DE 297 07 437 U 1 bekannt.

Solche Bördelrandspannstifte dienen beispielsweise zur Befestigung und Sicherung von Holzlatten, Verblendungen, Unterkonstruktionen, Isoliermaterialien oder dergleichen Bauteilen an Wänden von Bauwerken. Häufig ist das Eintreibende des Bördelrandspannstiftes mit einer Fase ausgestattet, die das Eintreiben in eine entsprechende Bohrung einer Wand oder dergleichen erleichtert. Solche Bördelrandspannstifte werden aus Federstahl hergestellt und sind derart bemessen, dass der Bördelrandspannstift beim Eintreiben in eine entsprechende Aufnahmebohrung einer Wand oder dergleichen radial federnd vorgespannt wird. Hierdurch wird der Bördelrandspannstift kraftschlüssig an die Bohrungswandung der Aufnahmebohrung gepresst. Solche Bördelrandspannstifte können aus Edelstahl gefertigt werden. Aus Kostengründen werden diese aber häufig aus normalem Federstahl gefertigt und anschließend verzinkt.

Bei den bisher üblichen Bördelrandspannstiften tritt der Effekt auf, dass die Bördelrandspannstifte beim Eintreiben in eine entsprechende Bohrung einknicken, was durch übermäßige Krafteinwirkung beim Eintreiben oder auch durch schräg aufgebrachte Hammerschläge oder dergleichen bewirkt werden kann. In diesem Falle muss der Montierende den Bördelrandspannstift umständlich aus der halb eingeschlagenen Position entfernen und einen neuen Bördelrandspannstift einsetzen, der unter Vermeidung des Einknickens des Bördelrandes eingetrieben wird. Ein weiterer Effekt, der als nachteilig angesehen wird, ist der, dass beim Eintreiben des Bördelrandspannstiftes der mit dem Bördelrand versehene Kopf aufgrund der Krafteinwirkung mittels Hammerschlag oder dergleichen radial auseinander gedrückt wird. Auch dies ist unerwünscht.

Ausgehend von dem eingangs bezeichneten Stand der Technik liegt der Erfindung die Aufgabe zugrunde, einen Bördelrandspannstift zu schaffen, der mit hoher Sicherheit den beim Eintreiben auf den mit Bördelrand versehenen Kopf wirkenden Kräften standhält, ohne dass der Bördelrandspannstift ausknickt oder an seinem Bördelrandende auseinanderspreizt, wobei der Bördelrandspannstift einfach zu fertigen sein soll, insbesondere durch einen in den Herstellungsvorgang integrierten Verformungsvorgang, der weder die Fertigungszeit noch die Werkzeugkosten oder Fertigungskosten verkompliziert oder verteuert.

Zur Lösung dieser Aufgabe wird vorgeschlagen, dass in unmittelbarer Nähe des Bördelrandes eine Einengung des Längsschlitzes erzeugt ist, wobei der Bördelrandspannstift in diesem Bereich eine Verformungszone in Form einer von der kreisrunden Querschnittsform der Hülse abweichenden Eindellung aufweist.

Bevorzugt ist dabei vorgesehen, dass beidseits neben dem Längsschlitz zum Inneren der Hülse gerichtete Verformungszonen ausgebildet sind.

Insbesondere ist auch bevorzugt vorgesehen, dass neben dem Längsschlitz beidseits niveaugleich zum Inneren der Hülse gerichtete Verformungszonen ausgebildet sind.

Durch die erfindungsgemäße Ausbildung wird offenbar eine Versteifung des Bördelrandspannstiftes in dem Bereich des Hülsenteils erreicht, der dem Bördelrand unmittelbar benachbart ist. Aufgrund dieser Versteifungswirkung hält der Bördelrandspannstift erhebliche Kräfte beim Eintreiben beispielsweise mittels Hammerschlag aus, ohne dass es zu einem Ausknicken des zunächst noch freien Endes des Bördelrandspannstiftes kommt. Zudem wird durch diese Ausbildung eine höhere Steifigkeit des Bördelrandspannstiftes insofern erreicht, als beim Eintreiben auch das Aufspreizen des Kopfes, der mit dem Bördelrand versehen ist, weitestgehend vermieden ist. Versuche haben ergeben, dass derartig ausgebildete Bördelrandspannstifte eine bis zu 20% höhere Steifigkeit als bisher übliche Bördelrandspannstifte aufweisen. Zudem können sie mit deutlich höheren Einschlagkräften eingetrieben werden, ohne daß ein Ausknicken des Bördelrandkopfes des Spannstiftes erfolgt.

Besonders bevorzugt ist dabei vorgesehen, daß im Bereich der Verformungszone die den Längsschlitz begrenzenden Randkanten der Hülse zum Inneren der Hülse eingedrückt sind.

Zudem kann bevorzugt vorgesehen sein, daß die Verformungszonen eine Breite (parallel zur Schlitzlängserstreckung) haben, die etwa dem halben Außendurchmesser der Hülse gleicht.

Zudem kann bevorzugt vorgesehen sein, daß die Verformungszonen eine wellenartige Einengung des Längsschlitzes bilden.

Durch die entsprechende Ausbildung der Verformungszone wird zudem neben den oben erläuterten Versteifungseffekten erreicht, daß ein Verketten von Bördelrandspannstiften im Bereich des mit dem Bördelrand versehenen Kopfes vermieden wird. Durch die entsprechende Verformungszone an den Randkanten des Längsschlitzes in unmittelbarer Nähe des Bördelrandes wird eine Einengung des Längsschlitzes in diesem Bereich erzeugt, wobei zudem in diesem Bereich der Bördelrandspannstift nicht mehr eine kreisrunde Querschnittsform, wie im übrigen Bereich der Hülse aufweist, sondern eine von der Kreisform abweichende Eindellung oder dergleichen im Bereich der Verformungszone besitzt. Hierdurch wird die Verkettungsneigung der Bördelrandspannstifte vermindert, so daß häufig auftretende Verkettungen von solchen Stiften vermieden werden. Solche Verkettungen treten beispielsweise auf, wenn die Spannstifte in Transportgefäßen als Schüttgut transportiert werden oder wenn sie sich beim Verzinken in Trommeln oder dergleichen bewegen. Ein weiterer Verkettungsschutz kann dadurch gebildet sein, daß der Längsschlitz am Hülsenende bis auf einen Spalt zusammengedrückt ist, der kleiner ist als die Wandstärke der metallischen Hülse. Diese Ausbildung ist bei den erfindungsgemäßen Bördelrandspannstiften vorteilhafter weise einsetzbar. Diese Ausbildung ist prinzipiell in der DE 297 07 437 U 1 beschrieben.

Bevorzugt ist ferner vorgesehen, daß die Tiefe der Verformungszone etwa gleich der Materialstärke des Hülsenmaterials oder gering größer als diese ist.

Auch kann bevorzugt sein, daß die Länge der vom Längsschlitz ausgehend in radialer Richtung der Hülse verlaufenden Verformungszonen etwa der zweifachen bis dreifachen Materialstärke der Hülsenmaterials entspricht.

Die erfindungsgemäßen Bördelrandspannstifte bedürfen bei der Fertigung keines größeren Kostenaufwandes, da die entsprechende Verformungszone bei der bisher üblichen Fertigung solcher Bördelrandspannstifte durch einen in den Herstellungsvorgang integrierten Verformungsvorgang erzeugt wird, der weder die Fertigungszeit noch die Werkzeugkosten oder Fertigungskosten verkompliziert oder verteuert.

Die Erfindung ist nachstehend anhand eines Ausführungsbeispieles erläutert.

Es zeigt:
- Fig.1: einen Bördelrandspannstift in Ansicht;
- Fig.2: desgleichen im Schnitt II/II der Fig.1 gesehen.

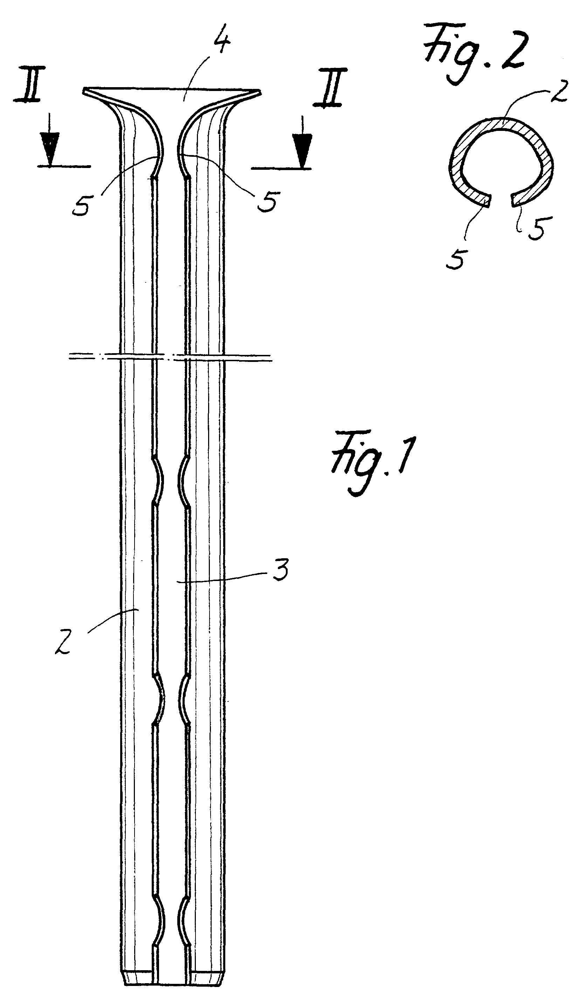

In der Erfindung ist ein Bördelrandspannstift 1 gezeigt. Er besteht aus einer metallischen Federhülse 2 mit durchgehendem Längsschlitz 3. An dem einen Ende der Federhülse 2 ist ein nach radial außen abragender Bördelrand 4 ausgebildet. Das in Eintreibrichtung vorn liegende Ende kann angefast sein, wobei zudem an diesem Ende der Längsschlitz 3 eingeengt sein kann, um eine verkettung von Bördelrandspannstiften miteinander zu vermeiden. Um zu vermeiden, daß der mit dem Bördelrand 4 versehene Kopf des Bördelrandspannstiftes 1 beim Eintreiben mittels Hammerschlag ausknickt oder im Bereich des Längsschlitzes aufspreizt, ist in einem dem Bördelrand 4 der Hülse 2 eng benachbarten Bereich, vorzugsweise in einem unmittelbar an den Bördelrand 4 anschließenden Bereich der Hülse 2 im neben dem Längsschlitz 3 befindlichen Bereich der Hülsenmantel zum Inneren der Hülse hin verformt. Dazu ist beidseits neben dem Längsschlitz 3 eine zum Inneren der Hülse 2 gerichtete Verformungszone 5 ausgebildet. Insbesondere sind neben dem Längsschlitz 3 beidseits niveaugleich zum Inneren der Hülse 2 gerichtete Verformungszonen ausgebildet. Die Verformungszone kann beispielsweise durch einen radialen oder tangentialen Eindruck des Materials erfolgen. Dabei sind im Bereich der Verformungszone die den Längsschlitz 3 begrenzenden Randkanten der Hülse zum Inneren der Hülse 2 eingedrückt. Die Verformungszone weist vorzugsweise eine Breite (parallel zur Schlitzlängserstreckung gesehen) auf, die etwa dem halben Außendurchmesser der Hülse 2 gleicht. Vorzugsweise ist durch die Verformungszonen 5 eine wellenartige Einengung des Schlitzes 3 gebildet, wie vornehmlich aus der Ansicht gemäß Fig.1 ersichtlich. Hierdurch wird nicht nur eine Versteifung und ein Knickschutz gebildet, sondern es wird auch eine Sperre gebildet, die ein Verketten von Bördelrandspannstiften am oberen Ende, der mit dem Bördelrand 4 versehen ist, vermeidet.

Die Tiefe der Verformungszone ist etwa gleich der Materialstärke des Hülsenmaterials. Die Länge der vom Längsschlitz 3 ausgehend in radialer Richtung der Hülse 2 verlaufenden Verformungszonen 5 entspricht etwa der zweifachen bis dreifachen Materialstärke des Hülsenmaterials.

Über die Länge der Hülse 2 verteilt oder nur am Ende der Hülse 2 können weitere Verformungszonen 5 gleicher Art und Ausbildung vorgesehen sein, wobei die nahe des Endes der Hülse 2 ausgebildete Verformungszone 5 auch einen Verkettungsschutz bildet.

Durch die erfindungsgemäße Ausbildung wird ein Bördelrandspannstift zur Verfügung gestellt, der beim Eintreiben beispielsweise mittels Hammerschlag hohe Kräfte schadlos aufzunehmen vermag, ohne dass der mit dem Bördelrand 4 versehene Kopf abknickt oder der Bördelrand 4 im Bereich des Schlitzes 3 aufspreizt. Zudem wird durch die entsprechende Ausbildung ein Verkettungsschutz gebildet.

Die Erfindung ist nicht auf das Ausführungsbeispiel beschränkt sondern im Rahmen der Offenbarung vielfach variabel.

## Patentansprüche

1. Bördelrandspannstift (1), bestehend aus einer metallischen Federhülse (2) mit durchgehendem Längsschlitz (3), an deren einem Ende ein nach radial außen abragender Bördelrand (4) ausgebildet ist, wobei der Hülsenmantel im neben dem Längsschlitz (3) befindlichen Bereich zum Inneren der Hülse (2) hin verformt ist, **dadurch gekennzeichnet, dass** in unmittelbarer Nähe des Bördelrandes (4) eine Einengung des Längsschlitzes (3) erzeugt ist, wobei der Bördelrandspannstift (1) in diesem Bereich eine Verformungszone (5) in Form einer von der kreisrunden Querschnittsform der Hülse (2) abweichenden Eindellung aufweist.

2. Bördelrandspannstift nach Anspruch 1, **dadurch gekennzeichnet, dass** beidseits neben dem Längsschlitz (3) zum Inneren der Hülse (2) gerichtete Verformungszonen (5) ausgebildet sind.

3. Bördelrandspannstift nach Anspruch 1 oder 2, **dadurch gekennzeichnet, dass** neben dem Längsschlitz (3) beidseits niveaugleich zum Inneren der Hülse (2) gerichtete Verformungszonen (5) ausgebildet sind.

4. Bördelrandspannstift nach einem der Ansprüche 1 bis 3 **dadurch gekennzeichnet, dass** im Bereich der Verformungszone (5) die den Längsschlitz (3) begrenzenden Randkanten der Hülse (2) zum Inneren der Hülse (2) eingedrückt sind.

5. Bördelrandspannstift nach einem der Ansprüche 1 bis 4, **dadurch gekennzeichnet, dass** die Verformungszonen eine Breite, gemessen parallel zur Schlitzlängserstreckung, haben, die etwa dem halben Außendurchmesser der Hülse (2) gleicht.

6. Bördelrandspannstift nach einem der Ansprüche 1 bis 5, **dadurch gekennzeichnet, dass** die Verformungszonen (5) eine wellenartige Einengung des Längsschlitzes (3) bilden.

7. Bördelrandspannstift nach einem der Ansprüche 1 bis 6, **dadurch gekennzeichnet, dass** die Tiefe der Verformungszone (5) etwa gleich der Materialstärke des Hülsenmaterials oder gering größer als diese ist.

8. Bördelrandspannstift nach einem der Ansprüche 1 bis 7, **dadurch gekennzeichnet, dass** die Länge der vom Längsschlitz (3) ausgehend in radialer Richtung der Hülse verlaufenden Verformungszonen (5) etwa der zweifachen bis dreifachen Materialstärke des Hülsenmaterials entspricht.

9. Bördelrandspannstift nach einem der Ansprüche 1 bis 8, **dadurch gekennzeichnet, dass** mehrere Verformungszonen (5) über die Länge der Hülse (2) verteilt oder eine weitere am Eintreibende der Hülse (2) vorgesehen sind oder ist.

## Claims

1. Flanged edge clamping pin (1), consisting of a metal spring sleeve (2) having a continuous longitudinal slot (3), at one end of which a radially outwardly projecting flanged edge (4) is formed, wherein the sleeve casing is deformed in the region next to the longitudinal slot (3) towards the interior of the sleeve (2), **characterized in that**, in the direct vicinity of the flanged edge (4), a narrowing of the longitudinal slot (3) is produced, wherein the flanged edge clamping pin (1) in this region has a deformation zone (5) in the form of a dent which differs from the circular cross-sectional shape of the sleeve (2).

2. Flanged edge clamping pin according to Claim 1, **characterized in that** deformation zones (5) directed towards the interior of the sleeve (2) are formed on both sides next to the longitudinal slot (3).

3. Flanged edge clamping pin according to Claim 1 or 2, **characterized in that** deformation zones (5) directed towards the interior of the sleeve (2) are formed next to the longitudinal slot (3) on both sides at the same level.

4. Flanged edge clamping pin according to one of Claims 1 to 3, **characterized in that** in the region of the deformation zone (5) the edges of the sleeve (2) which delimit the longitudinal slot (3) are pressed in towards the interior of the sleeve (2).

5. Flanged edge clamping pin according to one of Claims 1 to 4, **characterized in that** the deformation zones have a width, measured parallel to the longitudinal extent of the slot, which is equal to approximately half the external diameter of the sleeve (2).

6. Flanged edge clamping pin according to one of Claims 1 to 5, **characterized in that** the deformation zones (5) form a wave-like narrowing of the longitudinal slot (3).

7. Flanged edge clamping pin according to one of Claims 1 to 6, **characterized in that** the depth of the deformation zone (5) is approximately equal to the material thickness of the sleeve material or slightly greater than the latter.

8. Flanged edge clamping pin according to one of Claims 1 to 7, **characterized in that** the length of the deformation zones (5) running from the longitudinal slot (3) in the radial direction of the sleeve corresponds to approximately two to three times the material thickness of the sleeve material.

9. Flanged edge clamping pin according to one of Claims 1 to 8, **characterized in that** a number of deformation zones (5) are distributed over the length of the sleeve (2) or a further deformation zone is provided at the drive-in end of the sleeve (2).

## Revendications

1. Goujon de serrage (1) à tête évasée, constitué d'une douille élastique métallique (2) à fente longitudinale ininterrompue (3), à l'une des extrémités de laquelle est façonné un collet rabattu (4) saillant radialement vers l'extérieur, l'enveloppe de la douille étant déformée vers l'intérieur de ladite douille (2) dans la région située à côté de la fente longitudinale (3), **caractérisé par le fait qu'**un resserrement de la fente longitudinale (3) est ménagé à proximité directe du collet rabattu (4), le goujon de serrage (1) à tête évasée comportant, dans cette région, une zone de déformation (5) se présentant comme une empreinte rentrante s'écartant de la configuration de section transversale circulaire de la douille (2).

2. Goujon de serrage à tête évasée, selon la revendication 1, **caractérisé par le fait que** des zones de déformation (5), dirigées vers l'intérieur de la douille (2), sont façonnées de part et d'autre à côté de la fente longitudinale (3).

3. Goujon de serrage à tête évasée, selon la revendication 1 ou 2, **caractérisé par le fait que** des zones de déformation (5) dirigées vers l'intérieur de la douille (2), à un même niveau, sont ménagées de part et d'autre à côté de la fente longitudinale (3).

4. Goujon de serrage à tête évasée, selon l'une des revendications 1 à 3, **caractérisé par le fait que** les arêtes marginales de la douille (2), délimitant la fente longitudinale (3), sont empreintes vers l'intérieur de ladite douille (2) dans la région de la zone de déformation (5).

5. Goujon de serrage à tête évasée, selon l'une des revendications 1 à 4, **caractérisé par le fait que** les zones de déformation possèdent une largeur qui, mesurée parallèlement à l'étendue longitudinale de la fente, équivaut sensiblement à la moitié du diamètre extérieur de la douille (2).

6. Goujon de serrage à tête évasée, selon l'une des revendications 1 à 5, **caractérisé par le fait que** les zones de déformation (5) matérialisent un resserrement ondulé de la fente longitudinale (3).

7. Goujon de serrage à tête évasée, selon l'une des revendications 1 à 6, **caractérisé par le fait que** la profondeur de la zone de déformation (5) est sensiblement égale ou légèrement supérieure à l'épaisseur du matériau constituant la douille.

8. Goujon de serrage à tête évasée, selon l'une des revendications 1 à 7, **caractérisé par le fait que** la longueur des zones de déformation (5), s'étendant dans le sens radial de la douille à partir de la fente longitudinale (3), représente sensiblement du double au triple de l'épaisseur du matériau constituant ladite douille.

9. Goujon de serrage à tête évasée, selon l'une des revendications 1 à 8, **caractérisé par le fait que** plusieurs zones de déformation (5) sont réparties sur la longueur de la douille (2), ou une zone supplémentaire est prévue à l'extrémité d'enfoncement de ladite douille (2).
